# EUROPEAN PATENT SPECIFICATION

(11) **EP 4 253 307 B1**
(45) Date of publication and mention of the grant of the patent: **22.07.2026**
(21) Application number: 23163435.3
(22) Date of filing: 22.03.2023
(51) Int. Cl.: B66F 9/075, B60W 30/18, B60W 50/14, B66F 9/24, B60W 50/10, B66F 17/00

(54) **INDUSTRIAL VEHICLE**
FLURFÖRDERZEUG
VÉHICULE INDUSTRIEL

(30) Priority: 29.03.2022 JP 2022053447
(43) Date of publication of application: 04.10.2023
(73) Proprietor: KABUSHIKI KAISHA TOYOTA JIDOSHOKKI, Kariya-shi, Aichi 448-8671 (JP)
(72) Inventor: AKATSUKA, Keisuke, Kariya-shi, Aichi, 448-8671 (JP)
(74) Representative: Hoffmann Eitle

(56) References cited:
- WO-A1-2021/111839
- JP-A- 2020 164 316

## Description

### BACKGROUND ART

The present invention relates to an industrial vehicle.

An industrial vehicle disclosed in Japanese Patent Application Publication No. 2022-012369 includes an object detector, a notification unit, and a controller. The object detector detects a position of an object. The notification unit performs notification to an operator of the industrial vehicle. The controller causes the notification unit to perform notification when an object is present in a detection area. The detection area may vary according to a position of the industrial vehicle. Since the detection area is set according to the current position of the industrial vehicle, excessive notification may be suppressed.

Even when the detection area is set according to the current position of the industrial vehicle, excessive notification by the notification unit may occur. For example, when the industrial vehicle is stopped near a wall, the notification may be performed due to the wall entering the detection area. In such a case, the notification unit continuously performs the notification even if an operator of the industrial vehicle does not have an intention of starting the industrial vehicle, which may make the operator feel unpleasant.

Further prior art can be found in JP 2020 164316 A, which discloses an industrial vehicle according to the preamble of claim 1, and WO 2021/111839A1.

### SUMMARY

The present invention is defined by the independent claims. Preferred embodiments are defined by the dependent claims. Further aspects are provided for facilitating the understanding of the invention.

Other aspects and advantages of the invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the embodiments together with the accompanying drawings in which:
FIG. 1 is a perspective view illustrating a forklift truck according to an embodiment;
FIG. 2 is a schematic view illustrating the configuration of the forklift truck;
FIG. 3 is a flowchart showing an object detection process;
FIG. 4 is a view schematically illustrating a notification area;
FIG. 5 is a condition transition chart showing a notification control;
FIG. 6 is a schematic view for describing an operation according to the embodiment; and
FIG. 7 is a schematic view for describing the operation according to the embodiment.

### DESCRIPTION OF EMBODIMENTS

The following will describe an embodiment of an industrial vehicle.

### <Forklift truck>

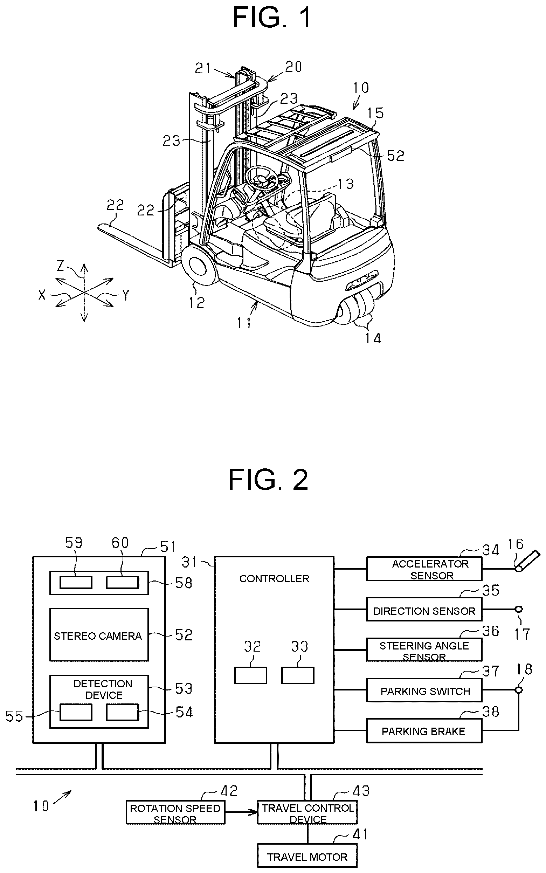

As illustrated in FIG. 1, a forklift truck 10 as an example of the industrial vehicle includes a vehicle body 11, two driving wheels 12, 13 disposed in the front of the vehicle body 11, two steering wheels 14 disposed in the rear of the vehicle body 11, and a cargo handling apparatus 20. The two driving wheels 12, 13 are spaced in a vehicle width direction. The two steering wheels 14 are disposed adjacently to each other in the vehicle width direction. The two steering wheels 14 are disposed at the central position between the driving wheels 12, 13 in the vehicle width direction. The forklift truck 10 may be regarded as a three-wheel forklift truck if the two steering wheels 14 disposed side by side are regarded as one steering wheel 14. The vehicle body 11 includes a head guard 15 provided above a driver seat. In the following description, terms of "front/rear", "forward/rearward", and "right/left" indicate orientations of the forklift truck 10.

The cargo handling apparatus 20 includes a mast 21, a pair of forks 22, and a lift cylinder 23. The mast 21 is provided in a front part of the vehicle body 11. The pair of forks 22 is movable up and down with the mast 21. A cargo is loaded on the pair of forks 22. The lift cylinder 23 is a hydraulic cylinder. The mast 21 moves up and down with extension and retraction of the lift cylinder 23. With up and down of the mast 21, the pair of forks 22 moves up and down accordingly. In the forklift truck 10 of the present embodiment, an operator performs a traveling operation and a cargo handling operation.

As illustrated in FIG. 2, the forklift truck 10 includes an accelerator pedal 16, a direction lever 17, a parking brake operation member 18, a controller 31, an accelerator sensor 34, a direction sensor 35, a steering angle sensor 36, a parking switch 37, a parking brake 38, a travel motor 41, a rotational speed sensor 42, a travel controller 43, and an object detector 51.

The controller 31 includes a processor 32 and a memory 33. As the processor 32, a CPU (Central Processing Unit), a GPU (Graphics Processing Unit), a DSP (Digital Signal Processor), or the like, is used, for example. The memory 33 includes a RAM (Random Access Memory) and a ROM (Read Only Memory). The memory 33 stores various programs to operate the forklift truck 10. The memory 33 stores program codes or commands configured to cause the processor 32 to execute processes. The memory 33, that is, a computer readable medium, includes any available medium that is accessible by a general-purpose computer or a dedicated computer. The controller 31 may be configured by a hardware circuit such as an ASIC (Application Specific Integrated Circuit) or an FPGA (Field Programmable Gate Array). The controller 31, which is a processing circuit, may include one or more processors for operating according to computer programs, one or more hardware circuits such as the ASIC or the FPGA, or a combination thereof.

The accelerator sensor 34 detects an operation amount of the accelerator pedal 16, that is, an accelerator opening degree. The accelerator sensor 34 outputs an electric signal corresponding to the accelerator opening degree to the controller 31. The controller 31 recognizes the accelerator opening degree based on the electric signal from the accelerator sensor 34.

The direction sensor 35 detects an operation direction of the direction lever 17 that indicates a traveling direction. The direction sensor 35 detects whether the direction lever 17 is operated in a direction indicating a forward travel or a direction indicating a rearward travel, with respect to a neutral position as a reference position. The direction sensor 35 outputs an electric signal indicative of the operation direction of the direction lever 17 to the controller 31. The controller 31 recognizes the operation direction of the direction lever 17 based on the electric signal from the direction sensor 35. The controller 31 recognizes whether the forward travel is indicated, the rearward travel is indicated, or neither of the forward travel nor the rearward travel is indicated by the operator.

The steering angle sensor 36 detects a steering angle of the steering wheels 14. The steering angle sensor 36 outputs an electric signal indicative of the steering angle to the controller 31. The controller 31 recognizes the steering angle based on the electric signal from the steering angle sensor 36.

The parking brake 38 is activated or deactivated by the operation of the parking brake operation member 18. The parking brake 38 may be a mechanical system parking brake or an electric system parking brake. In the mechanical system parking brake, the parking brake 38 is directly activated with the parking brake 38 connected to the parking brake operation member 18 with a wire. In the electric system parking brake, the parking brake 38 is electrically activated with an operation of the parking brake operation member 18.

The parking switch 37 detects whether or not the parking brake 38 is activated. The parking switch 37 is ON when the parking brake 38 is activated by the parking brake operation member 18. The parking switch 37 is OFF when the parking brake 38 is deactivated by the parking brake operation member 18.

An operator of the forklift truck 10 activates the parking brake 38 when the forklift truck 10 is stopped. The operator of the forklift truck 10 deactivates the parking brake 38 when starting the forklift truck 10 from a state in which the forklift truck 10 is stopped. Whether or not the parking brake 38 is activated indicates whether or not the operator of the forklift truck 10 has an intention of starting the traveling of the forklift truck 10. Whether or not the operator of the forklift truck 10 has the intention of starting the forklift truck 10 may be detected by detecting whether or not the parking brake 38 is activated with the parking switch 37. When the parking switch 37 is ON, the parking switch 37 does not detect the intention of starting the forklift truck 10. In other words, when the parking switch 37 is ON, the parking switch 37 detects an intention of stopping the forklift truck 10. When the parking switch 37 is OFF, the parking switch 37 detects the intention of starting the forklift truck 10. In other words, when the parking switch 37 is OFF, the parking switch 37 does not detect the intention of stopping the forklift truck 10. The parking switch 37 functions as an intention-of-starting detector. In the following description, the intention of starting the forklift truck 10 will be referred to as the intention of starting.

The travel motor 41 is a drive device for the forklift truck 10 to travel. The driving wheels 12, 13 rotate with the operation of the travel motor 41, which allows the forklift truck 10 to travel. The travel motor 41 is provided to each of the driving wheels 12, 13.

The rotational speed sensor 42 detects the rotational speed of the travel motor 41. For example, a rotary encoder may be used as the rotational speed sensor 42. The rotational speed sensor 42 outputs an electric signal indicative of the rotational speed of the travel motor 41 to the travel controller 43.

The travel controller 43 is a motor driver that controls the rotational speed of the travel motor 41. The travel controller 43 recognizes the rotational speed and a rotational direction of the travel motor 41 based on the electric signal from the rotational speed sensor 42. The rotational direction of the travel motor 41 is represented by + and - signs. When the + sign is added to the rotational speed, it indicates the positive rotation, and when the - sign is added, it indicates the negative rotation.

The object detector 51 detects a position of an object. The object detector 51 includes a stereo camera 52, a detection unit 53, and a notification unit 58. The stereo camera 52 include two cameras and captures images with the two cameras. As illustrated in FIG. 1, the stereo camera 52 is disposed in the head guard 15. The stereo camera 52 is disposed so that a road surface on which the forklift truck 10 travels can be seen from above the forklift truck 10. The stereo camera 52 of the present embodiment captures an image of an area behind the forklift truck 10. Thus, the object detected by the object detector 51 is an object present behind the forklift truck 10. A detection direction by the object detector 51 corresponds to the area behind the forklift truck 10. The notification unit 58 and the detection unit 53 may be unitized and disposed in the head guard 15 together with the stereo camera 52. The notification unit 58 and the detection unit 53 may be disposed at a position different from the head guard 15.

The detection unit 53 includes a processor 54 and a memory 55. As the processor 54, a CPU, a GPU, or a DSP is used, for example. The memory 55 includes a RAM and a ROM. The memory 55 stores various programs for detecting an object in an image captured by the stereo camera 52. The memory 55 stores program codes or commands configured to cause the processor 54 to execute processes. The memory 55, that is, a computer readable medium, includes any available medium that is accessible by a general-purpose computer or a dedicated computer. The detection unit 53 may include a hardware circuit such as an ASIC and an FPGA. The detection unit 53, which is a processing circuit, may include one or more processors for operating in accordance with computer programs, one or more hardware circuits such as the ASIC and the FPGA, or a combination thereof.

The detection unit 53 repeatedly performs the following object detection process at a predetermined control period to detect an object present behind the forklift truck 10. The detection unit 53 derives a position of the detected object. The position of the object is a position of the object relative to the forklift truck 10.

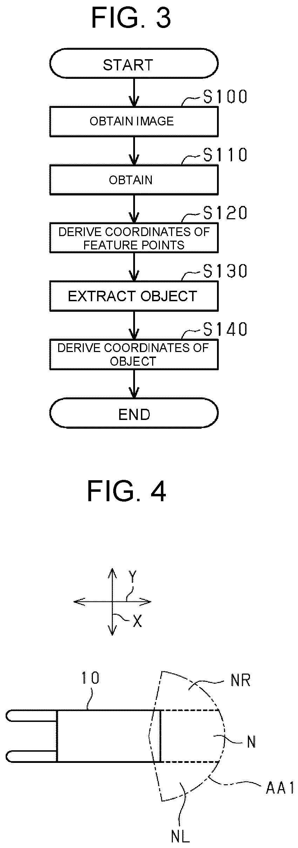

As illustrated in FIG. 3, at Step S100, the detection unit 53 obtains an image from the stereo camera 52.

Next, at Step S110, the detection unit 53 performs stereo processing to obtain a disparity image. The disparity image is an image in which a disparity [px] is associated with a pixel. The disparity image is not necessarily displayed and refers to data in which a disparity is associated with each pixel in the disparity image. The disparity is obtained by comparing two images captured by the stereo camera 52 and deriving a difference in the number of pixels between the images for the same feature points reflected in the images. The feature point is a portion recognizable as a border such as an edge of an object. The feature point is detected from information of brightness, and the like.

Subsequently, at Step S120, the detection unit 53 derives coordinates of feature points in a world coordinate system that is a coordinate system on a real space. The world coordinate system is a coordinate system in which an axis extending in the vehicle width direction of the forklift truck 10 in a horizontal direction is an X axis, an axis orthogonal to the X axis in the horizontal direction is a Y axis, and an axis extending in a vertical direction is a Z axis in a state in which the forklift truck 10 is located on a horizontal plane. The coordinates of the feature points are derived by deriving coordinates of the feature points in a camera coordinate system from a base line length of the stereo camera 52, a focal length of the stereo camera 52, and the disparity image obtained in step S110 and thereafter converting the coordinates into coordinates in the world coordinate system. As illustrated in FIG. 1, the X-axis, the Y-axis, and the Z-axis are represented by arrows X, Y, and Z.

Subsequently, at Step S130, the detection unit 53 extracts an object by clustering the feature points. The detection unit 53 defines, as one point group, a set of feature points assumed to represent the same object among the feature points representing a part of the object, and extracts the one point group as the object. The detection unit 53 performs clustering to recognize the feature points positioned in a predetermined range as one point group based on the coordinates of the feature points in the world coordinate system derived at Step S120. The detection unit 53 recognizes the clustered point group as one object. The clustering of the feature points at Step S130 may be performed by various methods.

Next, at Step S140, the detection unit 53 derives coordinates of the object in the world coordinate system. The coordinates of the object can be derived from the coordinates of the feature points forming the point group. The coordinates of the object in the world coordinate system represent a position of the object relative to the forklift truck 10. Specifically, in the coordinates of the object in the world coordinate system, an X-coordinate represents a distance from an original point to the object in the right-left direction, and a Y-coordinate represents a distance from the original point to the object in the front-rear direction. The original point corresponds to, for example, coordinates in which the X-coordinate and the Y-coordinate represent a position of the stereo camera 52 and a Z-coordinate represents the road surface. A Euclidean distance from the position of the stereo camera 52 to the object may be derived from the X-coordinate and the Y-coordinate. The Z-coordinate of the coordinates of the object in the world coordinate system represents a height of the object from the road surface.

The notification unit 58 is a device that performs notification to the operator of the forklift truck 10. The notification unit 58 includes a buzzer 59 that alerts with sound and a lamp 60 that alerts with light.

### Control Performed by Controller

The controller 31, the travel controller 43, and the object detector 51 obtain information from each other. The controller 31, the travel controller 43, and the object detector 51 obtain the information from each other through communication in accordance with a communication protocol for the vehicle, such as CAN (Controller Area Network) or LIN (Local Interconnect Network).

The controller 31 derives the vehicle speed of the forklift truck 10. The vehicle speed of the forklift truck 10 is derived using the rotational speed and the rotational direction of the travel motor 41 provided to each of the driving wheels 12 and 13, a gear ratio, outer diameters of the driving wheels 12 and 13, a steering angle detected by the steering angle sensor 36, and the like. The rotational speed and the rotational direction of the travel motor 41 may be obtained from the travel controller 43. The gear ratio and the outer diameters of the driving wheel 12 are only required to be stored in the memory 33 in advance. The controller 31 derives a traveling direction of the forklift truck 10 as well as the vehicle speed of the forklift truck 10. The traveling direction of the forklift truck 10 is either a forward travel direction or a rearward travel direction.

The controller 31 transmits a notification command to the object detector 51 to operate the notification unit 58. Specifically, the object detector 51 includes an operation member configured to operate the notification unit 58 upon the reception of the notification command.

### <Notification area>

The controller 31 performs a notification control. The notification control is a control in which notification by the notification unit 58 is performed in accordance with the position of an object detected by the object detector 51. The following will first describe a notification area used for the notification control.

As illustrated in FIG. 4, a notification area AA1 used for the notification control is set within an object detectable range of the object detector 51. The object detectable range of the object detector 51 corresponds to an image capturable range by the stereo camera 52. The notification area AA1 is an area extending from the position of the stereo camera 52 to rearward of the forklift truck 10 and in the vehicle width direction of the forklift truck 10. The notification area AA1 is an area defined by the X-coordinate and the Y-coordinate in the world coordinate system. In the following description, the X-coordinate and the Y-coordinate indicate the X-coordinate and the Y-coordinate in the world coordinate system.

The notification area AA1 is divided into three areas corresponding to a central area N, a left area NL positioned on the left of the central area N, and a right area NR positioned on the right of the central area N. The central area N is an area facing the forklift truck 10 in the front-rear direction. A dimension of the central area N in the right-left direction corresponds to that of the forklift truck 10 in the vehicle width direction. It can be said that the central area N is an area through which the forklift truck 10 passes when the forklift truck 10 travels straight in the rearward travel direction. It can be said that the left area NL is an area through which the forklift truck 10 passes when the forklift truck 10 turns left while traveling in the rearward travel direction. It can be said that the right area NR is an area through which the forklift truck 10 passes when the forklift truck 10 turns right while travelling in the rearward travel direction. A dimension of the notification area AA1 in the front-rear direction and the dimension of the notification area AA1 in the right-left direction may be adjusted arbitrarily.

### <Notification Control>

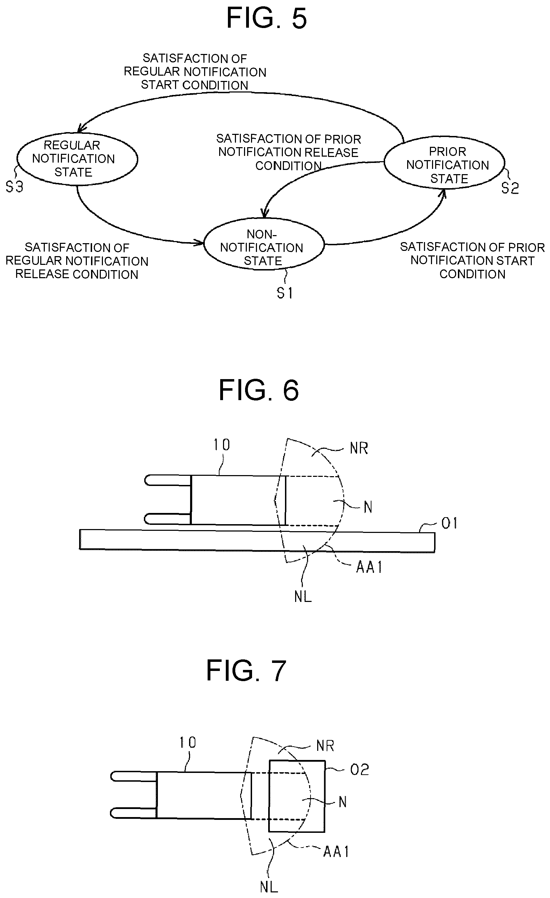

As illustrated in FIG. 5, in the notification control, the controller 31 transitions to one of a non-notification state S1, a prior notification state S2, and a regular notification state S3. The controller 31 performs a control in accordance with the non-notification state S1, the prior notification state S2, and the regular notification state S3.

The non-notification state S1 is a state in which the notification unit 58 does not perform notification.

The prior notification state S2 is a state in which the notification unit 58 performs prior notification. In the present embodiment, the buzzer 59 generates a sound and the lamp 60 blinks in the prior notification.

The regular notification state S3 is a state in which the notification unit 58 performs regular notification. The regular notification is notification stronger than the prior notification. The stronger notification is notification that allows the operator of the forklift truck 10 to recognize that an object is present around the forklift truck 10 more easily. In the present embodiment, an interval between lights emitted by the lamp 60 in the regular notification is shorter than that in the prior notification. In the present embodiment, an interval between sounds generated by the buzzer 59 in the regular notification is shorter than that in prior notification. The notification by the notification unit 58 includes the prior notification and the regular notification.

As has been described, notification modes of the notification unit 58 are different among the states S1 to S3. In other words, the states S1 to S3 are states classified by the notification modes. A vehicle speed limit of the forklift truck 10 may be imposed in the states S1 to S3. Each of the states S1 to S3 may include a plurality of states having a different vehicle speed limit mode. For example, the non-notification state S1 may include a state in which the vehicle speed limit is imposed, and a state in which the vehicle speed limit is not imposed.

When a prior notification start condition is satisfied while the controller 31 is in the non-notification state S1, the controller 31 transitions to the prior notification state S2. The prior notification start condition is satisfied when all of a first prior notification condition, a second prior notification condition and a third prior notification condition are satisfied.

| | |
|---|---|
| First prior notification condition | The forklift truck 10 is stopped. |
| Second prior notification condition | An object is present in the notification area AA1. |
| Third prior notification condition | The parking brake 38 is not activated. |

Whether or not the first prior notification condition is satisfied is determined based on the vehicle speed derived by the controller 31. The controller 31 determines that the forklift truck 10 is stopped when the vehicle speed is equal to or less than a stop determination threshold [km/h]. The stop determination threshold is set to a value at which the forklift truck 10 is considered to be stopped. For example, any value from 0 [km/h] to 0.5 [km/h] may be set as the stop determination threshold.

Whether or not the second prior notification condition is satisfied is determined based on an X-coordinate and a Y-coordinate of an object. Since the notification area AA1 is defined by the X-coordinate and the Y- coordinate, whether the object is present in the notification area AA1 is determined based on the X-coordinate and the Y-coordinate of the object.

Whether or not the third prior notification condition is satisfied is determined based on the detection result of the parking switch 37. When the parking brake 38 is not activated, it can be said that the operator of the forklift truck 10 has an intention of starting the forklift truck 10. The prior notification start condition includes a detection of the intention of starting by the parking switch 37. That is, the prior notification is permitted when the parking switch 37 detects the intention of starting.

When a prior notification release condition is satisfied while the controller 31 is in the prior notification state S2, the controller 31 transitions to the non-notification state S1. When at least one of the first prior notification condition, the second prior notification condition, and the third prior notification condition is no longer satisfied, the prior notification release condition is satisfied. "At least one" used in this specification means "one or more" desired options. As one example, when the number of the options is two, "at least one" used in this specification means "only one of the options" or "both of the two options". As another example, when the number of the options is three or more, "at least one" used in this specification means "only one of the options" or "any desired combination of two or more options". When the third prior notification condition is not satisfied, the controller 31 transitions to the non-notification state S1, thereby stopping the prior notification. In other words, the prior notification is stopped when the parking switch 37 does not detect the intention of starting.

When a regular notification start condition is satisfied while the controller 31 is in the prior notification state S2, the controller 31 transitions to the regular notification state S3. The regular notification start condition is satisfied when all of a first regular notification condition, a second regular notification condition, a third regular notification condition, and a fourth regular notification condition are satisfied. Since the controller 31 transitions from the prior notification state S2 to the regular notification state S3, the prior notification is performed before the regular notification. The prior notification is notification that is performed prior to the regular notification.

| | |
|---|---|
| First Regular Notification Condition | The forklift truck 10 is stopped. |
| Second Regular Notification Condition | An object is present in an expected travel area of the forklift truck 10. |
| Third Regular Notification Condition | The detection result of the direction sensor 35 is the rearward travel. |
| Fourth Regular Notification Condition | Accelerator ON |

The first regular notification condition is the same condition as the first prior notification condition.

Whether or not the second regular notification condition is satisfied is determined based on the detection result of the steering angle sensor 36 and the X-coordinate and the Y-coordinate of the object. The expected travel area of the forklift truck 10 is an area to which the forklift truck 10 is expected to travel among the central area N, the left area NL, and the right area NR. When the steering angle of the steering wheel 14 detected by the steering angle sensor 36 is equal to or greater than a predetermined angle in a left turn direction, it is determined that the forklift truck 10 turns left. When the steering angle of the steering wheel 14 detected by the steering angle sensor 36 is equal to or greater than a predetermined angle in a right turn direction, it is determined that the forklift truck 10 turns right. The predetermined angle used for determining whether the forklift truck 10 is turning left or right may be set, for example, to an angle within a range from 4 degree to 6 degree. When the steering angle of the steering wheel 14 detected by the steering angle sensor 36 is less than the predetermined angle, it is determined that the forklift truck 10 travels straight. When the forklift truck 10 travels straight, the expected travel area of the forklift truck 10 is the central area N. When the forklift truck 10 turns left, the expected travel area of the forklift truck 10 is the left area NL and the central area N. When the forklift truck 10 turns right, the expected travel area of the forklift truck 10 is the right area NR and the central area N. When the expected travel area matches the areas N, NL, NR where an object is present, the controller 31 determines that the second regular notification condition is satisfied. When a single object is positioned across the areas N, NL, NR, or when objects are positioned in the different areas N, NL, NR, the controller 31 determines that an object is present in the areas N, NL, NR. In this case, when one of the areas N, NL, NR where the object is present matches the expected travel area, the controller 31 determines that the second regular notification condition is satisfied.

The fourth regular notification condition may be determined based on the detection result of the accelerator sensor 34. The accelerator ON indicates that the accelerator pedal 16 is operated by the operator of the forklift truck 10.

When the regular notification release condition is satisfied while the controller 31 is in the regular notification state S3, the controller 31 transitions to the non-notification state S1. The regular notification release condition is satisfied when, out of a first release condition, a second release condition, a third release condition, and a fourth release condition, the first release condition is satisfied and at least one of the second release condition, the third release condition, and the fourth release condition is satisfied.

| | |
|---|---|
| First release condition | Accelerator OFF |
| Second release condition | An object is no longer present in the notification area AA1. |
| Third release condition | The detection result of the direction sensor 35 is the forward travel. |
| Fourth release condition | The parking brake 38 is switched from the |
| | deactivated state to the activated state. |

Whether or not the first release condition is satisfied may be determined based on the detection result of the accelerator sensor 34. The accelerator OFF indicates that the accelerator pedal 16 is not operated by the operator of the forklift truck 10.

Whether or not the second release condition is satisfied may be determined based on an X-coordinate and a Y-coordinate of an object.

Whether or not the fourth release condition is satisfied may be determined based on the detection result of the parking switch 37. When the first release condition is satisfied and the fourth release condition is satisfied, the controller 31 transitions to the non-notification state S1, thereby stopping the regular notification. In other words, the regular notification is stopped when the parking switch 37 does not detect the intention of starting.

### Operation of Embodiment

The controller 31 performs notification according to a positional relationship between the forklift truck 10 and an object. In the prior notification, the notification is performed when the object is in the notification area AA1. The forklift truck 10 is used in a workplace where the cargo handling operation is performed. The operator of the forklift truck 10 may work while leaving the forklift truck 10 temporarily, and check documents while being on the forklift truck 10. In these cases, as illustrated in FIG. 6, the forklift truck 10 may be pulled up near the wall. Thus, a wall O1 enters the notification area AA1. In addition, as illustrated in FIG. 7, in a case where the forklift truck 10 approaches an object O2 with the rearward travel of the forklift truck 10, the object O2 enters the notification area AA1. In these cases, if the notification is performed regardless of whether or not the parking brake 38 is activated, the notification is performed even if the operator of the forklift truck 10 has no intention of starting the forklift truck 10. If the operator of the forklift truck 10 has no intention of starting the forklift truck 10, a possibility of the forklift truck 10 in contact with an object is low. The object may move out the notification area AA1 while the forklift truck 10 is stopped. If the operator of the forklift truck 10 has no intention of starting the forklift truck 10, it is highly unnecessary to perform notification by the notification unit 58.

In the present embodiment, the parking brake 38 being deactivated is set as the third prior notification condition. The parking brake 38 being deactivated is considered that the operator of the forklift truck 10 has an intention of starting the forklift truck 10. In this case, the prior notification by the notification unit 58 is permitted. When the parking brake 38 is activated, the notification by the notification unit 58 is stopped. A risk of the forklift truck 10 in contact with an object arises while the forklift truck 10 is traveling. By performing the prior notification when the operator of the forklift truck 10 has an intention of starting, the notification may be performed when there is a risk of the forklift truck 10 in contact with an object. When the parking brake 38 is activated with the forklift truck 10 pulled up near the wall, as illustrated in FIG. 6, the notification by the notification unit 58 is not performed. Even when the object O2 is present in the notification area AA1, as illustrated in FIG. 7, the notification by the notification unit 58 is not performed when the parking brake 38 is activated.

### Effects of Embodiment

(1) When the operator of the forklift truck 10 has no intention of starting, the notification by the notification unit 58 is stopped. This prevents the notification by the notification unit 58 from being performed excessively even if the operator of the forklift truck 10 has no intention of starting.
(2) When the first release condition is satisfied and the fourth release condition is satisfied, the controller 31 transitions to the non-notification state S1, thereby stopping the regular notification. The fourth release condition corresponds to the parking brake 38 being switched from the deactivated state to the activated state. When the third prior notification condition is not satisfied, the controller 31 transitions to the non-notification state S1, thereby stopping the prior notification. When the third prior notification condition is not satisfied, the parking brake 38 is switched from the deactivated state to the activated state. The parking brake 38 being switched from the deactivated state to the activated state means that the parking switch 37 no longer detects the intention-of-starting. This allows the notification by the notification unit 58 to be stopped on the condition that the parking brake 38 is switched from deactivated state to activated state.
(3) The parking switch 37 is used as the intention-of-starting detector. When the forklift truck 10 is started, the parking brake 38 is deactivated. When the forklift truck 10 is stopped, the parking brake 38 is activated. Specifically, when the operator of the forklift truck 10 leaves the forklift truck 10 temporarily, it is thought that the parking brake 38 is activated. In this way, whether or not the operator of the forklift truck 10 has an intention of starting is likely to be indicated by the operation of parking brake 38. By using the parking switch 37 as the intention-of-starting detector, whether or not the operator of the forklift truck 10 has an intention of starting may be detected appropriately.
(4) The prior notification start condition includes the third prior notification condition that the parking brake 38 is deactivated. Thus, the prior notification is permitted when the parking brake 38 is deactivated. When the parking brake 38 is deactivated, the operator of the forklift truck 10 has an intention of starting. By permitting the prior notification in this case, the notification may be performed when there is a risk of the forklift truck 10 in contact with an object.
(5) The regular notification start condition does not include a condition that the parking brake 38 is deactivated. Even when the controller 31 determines that the parking brake 38 is constantly activated due to malfunction of the parking switch 37, the regular notification is permitted.

### Modifications

The embodiment can be modified and implemented as follows. The embodiment and the following modifications can be implemented in combination within a technically consistent scope.

The direction sensor 35 may be used as the intention-of-starting detector. The direction sensor 35 detects an operation direction of the direction lever 17 that indicates a traveling direction. The direction sensor 35 detects whether the direction lever 17 is operated in a direction indicating a forward travel or a direction indicating a rearward travel, with respect to a neutral position as a reference position. When the detection result of the direction sensor 35 is neutral, it can be said that the operator of the forklift truck 10 has no intention of starting. The controller 31 determines that the intention of starting is not detected when the detection result of the direction sensor 35 is neutral. The controller 31 determines that the intention of starting is detected when the detection result of the direction sensor 35 is the rearward travel.

A sensor that detects whether or not the operator of the forklift truck 10 is on the forklift truck 10 may be used as the intention-of-starting detector. In a case where the forklift truck 10 is a counter type forklift truck, a seating sensor that determines whether or not the operator is on the seat may be used as the sensor. In a case where the forklift truck 10 is a reach type forklift truck, a sensor that determines whether or not the operator is on the forklift truck 10 may be used as the sensor. The controller 31 determines that the intention of starting is detected when the operator of the forklift truck 10 is on the forklift truck 10. The controller 31 determines that the intention of starting is not detected when the operator of the forklift truck 10 is not on the forklift truck 10.

In a case where the forklift truck 10 is a reach type forklift truck, a dead man's switch may be used as the intention-of-starting detector. The dead man's switch is a switch that is operated when an operator is on the forklift truck 10 and has an intention of starting. The dead man's switch detects whether or not a dead man's brake is operated. The controller 31 determines that the intention of starting is detected when the dead man's switch detects that the dead man's brake is operated. The controller 31 determines that the intention of starting is not detected when the dead man's switch does not detect that the dead man's brake is operated.

The regular notification is preferably notification stronger than the prior notification. For example, in the regular notification, a sound of the buzzer 59 may be louder than the sound of the buzzer 59 in the prior notification. When the prior notification is notification performed with one of the lamp 60 and the buzzer 59, the regular notification may be notification performed with the lamp 60 and the buzzer 59.

A display device provided at a position visible from the operator of the forklift truck 10 may be used as the notification unit 58. One of the buzzer 59 and the lamp 60 may be provided as the notification unit 58.

The second regular notification condition may be that an object is present in the notification area AA1. That is, the notification area AA1 need not be divided into three areas.

The forklift truck 10 may be a forklift truck 10 driven by an engine. In this case, the fourth regular notification condition is removed from the regular notification start condition. That is, the regular notification start condition is satisfied when all of the first regular notification condition, the second regular notification condition, and the third regular notification condition are satisfied. Further, the first release condition is changed to the direction lever 17 being operated to the neutral.

The object detector 51 may be configured to detect a position of an object present in the forward travel direction of the traveling directions of the forklift truck 10. In this case, the stereo camera 52 is disposed to be directed toward the front of the forklift truck 10. When the position of the object present in the forward travel direction of the forklift truck 10 is detected by the object detector 51, the notification area AA1 is an area expanding forward from the forklift truck 10. In this case, the third regular notification condition and the third release condition are changed as below.

Third regular notification condition ... The detection result of the direction sensor 35 is the front travel.

Third release condition ... The detection result of the direction sensor 35 is the rearward travel.

The object detector 51 may be a detector capable of detecting a position of an object present in both of the forward travel direction and the rearward travel direction of the traveling directions of the forklift truck 10. For example, the stereo camera 52 for the forward travel and the stereo camera 52 for the rearward travel, or a fish-eye camera may be provided. In this case, the notification area AA1 includes a forward area expanding in the front from the forklift truck 10 and a rearward area expanding in the rear from the forklift truck 10. When the forklift truck 10 travels forward, the controller 31 performs the notification control with the forward area as the notification area AA1. When the forklift truck 10 travels rearward, the controller 31 performs the notification control with the rearward area as the notification area AA1.

The object detector 51 may use a monocular camera, a ToF: Time of Flight camera, a LIDAR: Laser Imaging Detection and Ranging, a millimeter wave radar, or the like, in place of the stereo camera 52. The object detector 51 may be provided by combining a plurality of sensors such as the stereo camera 52, the LIDAR, and the like.

A member other than the object detector 51 may include the notification unit 58.

The notification unit 58 may be configured to be directly operated by the controller 31.

The forklift truck 10 may be a forklift truck that may switch automatic operation and manual operation.

The industrial vehicle may be a tractor used for conveyance of a cargo, an order picker used for picking work, and the like.

## Claims

1. An industrial vehicle (10) comprising:
an object detector (51) configured to detect a position of an object;
a notification unit (58) configured to perform notification;
a controller (31) configured to control the notification unit (58) according to the position of the object; and
an intention-of-starting detector (37) configured to detect whether an operator of the industrial vehicle (10) has an intention of starting the industrial vehicle (10), wherein
the controller (31) is configured to
stop in a non-notification state (S1) the notification by the notification unit (58) when the intention-of-starting detector (37) does not detect the intention of starting,
permit in a prior notification state (S2) the notification by the notification unit (58) when the intention-of-starting detector (37) detects the intention of starting,
**characterized in that**
the controller (31) is further configured to transition from the prior notification state (S2) to the non-notification state (S1) when at least one of a first notification condition that the industrial vehicle (10) is stopped,
a second notification condition that a position of an object is detected to be in a notification area, and
a third notification condition that a parking brake (38) is not activated, is no longer satisfied, and
transition from the non-notification state (S1) to the prior notification state (S2) when the first notification condition, the second notification condition and the third notification condition are satisfied.

2. The industrial vehicle (10) according to claim 1, **characterized in that**
the controller (31) stops the notification by the notification unit (58) when the intention-of-starting detector (37) no longer detects the intention-of-starting while the notification by the notification unit (58) is performed.

3. The industrial vehicle (10) according to claim 1 or 2, **characterized in that**
the intention-of-starting detector (37) detects whether a parking brake (38) is activated.

## Patentansprüche

1. Flugförderzeug (10), umfassend:
einen Objektdetektor (51), der ausgebildet ist, eine Position eines Objekts zu detektieren;
eine Benachrichtigungseinheit (58), die ausgebildet ist, eine Benachrichtigung durchzuführen;
eine Steuereinheit (31), die ausgebildet ist, die Benachrichtigungseinheit (58) entsprechend der Position des Objekts zu steuern; und
einen Detektor für eine Startabsicht (37), der ausgebildet ist, zu detektieren, ob ein Bediener des Flurförderzeugs (10) eine Absicht zum Starten des Flurförderzeugs (10) aufweist, wobei die Steuereinheit (31) ausgebildet ist, in einem Nicht-Benachrichtigungszustand (S1) die Benachrichtigung durch die Benachrichtigungseinheit (58) zu stoppen, wenn der Detektor für eine Startabsicht (37) die Absicht zum Starten nicht detektiert, in einem Vorbenachrichtigungszustand (S2) die Benachrichtigung durch die Benachrichtigungseinheit (58) zuzulassen, wenn der Detektor für eine Startabsicht (37) die Startabsicht detektiert, **dadurch gekennzeichnet, dass** die Steuereinheit (31) ferner ausgebildet ist, von dem Vorbenachrichtigungszustand (S2) in den Nicht-Benachrichtigungszustand (S1) überzugehen, wenn mindestens eine von einer ersten Benachrichtigungsbedingung, dass das Flurförderzeug (10) gestoppt ist, einer zweiten Benachrichtigungsbedingung, dass eine Position eines Objekts als in einem Benachrichtigungsbereich befindlich detektiert wird, und
einer dritten Benachrichtigungsbedingung, dass eine Feststellbremse (38) nicht aktiviert ist, nicht mehr erfüllt ist, und von dem Nicht-Benachrichtigungszustand (S1) in den Vorbenachrichtigungszustand (S2) überzugehen, wenn die erste Benachrichtigungsbedingung, die zweite Benachrichtigungsbedingung und die dritte Benachrichtigungsbedingung erfüllt sind.

2. Flurförderzeug (10) nach Anspruch 1,
**dadurch gekennzeichnet, dass**
die Steuereinheit (31) die Benachrichtigung durch die Benachrichtigungseinheit (58) stoppt, wenn der Detektor für eine Startabsicht (37) die Startabsicht nicht mehr detektiert, während die Benachrichtigung durch die Benachrichtigungseinheit (58) durchgeführt wird.

3. Flurförderzeug (10) nach Anspruch 1 oder 2, **dadurch gekennzeichnet, dass** der Detektor für eine Startabsicht (37) detektiert, ob eine Feststellbremse (38) aktiviert ist.

## Revendications

1. Véhicule industriel (10) comprenant :
un détecteur (51) d'objet configuré pour détecter une position d'un objet ;
une unité de notification (58) configurée pour effectuer une notification ;
un contrôleur (31) configuré pour commander l'unité de notification (58) selon la position de l'objet ; et
un détecteur d'intention de démarrer (37) configuré pour détecter si un opérateur du véhicule industriel (10) a l'intention de démarrer le véhicule industriel (10), dans lequel le contrôleur (31) est configuré pour arrêter dans un état de non-notification (S1) la notification par l'unité de notification (58) lorsque le détecteur d'intention de démarrer (37) ne détecte pas l'intention de démarrer, autoriser dans un état de notification préalable (S2) la notification par l'unité de notification (58) lorsque le détecteur d'intention de démarrer (37) détecte l'intention de démarrer,
**caractérisé en ce que**
le contrôleur (31) est en outre configuré pour passer de l'état de notification préalable (S2) à l'état de non-notification (S1) lorsqu'au moins une parmi une première condition de notification selon laquelle le véhicule industriel (10) est à l'arrêt,
une deuxième condition de notification selon laquelle une position d'un objet est détectée comme se situant dans une zone de notification, et
une troisième condition de notification selon laquelle un frein de stationnement (38) n'est pas activé, n'est plus satisfaite, et
passer de l'état de non-notification (S1) à l'état de notification préalable (S2) lorsque la première condition de notification, la deuxième condition de notification et la troisième condition de notification sont satisfaites.

2. Véhicule industriel (10) selon la revendication 1,
**caractérisé en ce que**
le contrôleur (31) arrête la notification par l'unité de notification (58) lorsque le détecteur d'intention de démarrer (37) ne détecte plus l'intention de démarrer tandis que la notification par l'unité de notification (58) est effectuée.

3. Véhicule industriel (10) selon la revendication 1 ou la revendication 2, **caractérisé en ce que**
le détecteur d'intention de démarrer (37) détecte si un frein de stationnement (38) est activé.
